(19) Europäisches Patentamt
European Patent Office
Office européen des brevets

(11) **EP 3 110 101 A1**

(12) **EUROPÄISCHE PATENTANMELDUNG**

(43) Veröffentlichungstag:
**28.12.2016 Patentblatt 2016/52**

(51) Int Cl.:
*H04L 29/06* (2006.01)  *H04L 9/32* (2006.01)

(21) Anmeldenummer: **16172350.7**

(22) Anmeldetag: **01.06.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **22.06.2015 DE 102015211451**

(71) Anmelder: **Volkswagen Aktiengesellschaft 38440 Wolfsburg (DE)**

(72) Erfinder:
• **Tschache, Alexander 38440 Wolfsburg (DE)**
• **Hartkopp, Oliver 38436 Wolfsburg (DE)**

(54) **VERFAHREN ZU EINEM MANIPULATIONSSCHUTZ VON ÜBER EIN BUSSYSTEM ZWISCHEN SYSTEMKOMPONENTEN ZU ÜBERTRAGENDEN NUTZDATENPAKETEN**

(57) Die Erfindung betrifft ein Verfahren zu einem Manipulationsschutz von über ein Bussystem (50) zwischen mindestens zwei Systemkomponenten (1, 2) zu übertragenden Nutzdatenpaketen (N), wobei die Systemkomponenten (1, 2) jeweils eine Signierungs- und Signierungsprüfungseinheit (10) umfassen, mittels welcher Datenpakete erzeug- und prüfbar sind.

Es ist vorgesehen, dass von einer ersten der Systemkomponenten (1) ein eigenständiges, Schutzdatenpaket (S) mit Schutzinformationen für ein über das Bussystem (50) zu übertragendes Nutzdatenpaket (N) generiert wird, welches von diesem Nutzdatenpaket (N) unabhängig, ihm jedoch gleichwohl eindeutig zuordenbar ist, wonach das generierte Schutzdatenpaket (S) separat von dem zugehörigen Nutzdatenpaket (N) über das Bussystem (50) an die zweite der Systemkomponenten (2) versendet wird, und eine Verifikation der Authentizität des übertragenden Nutzdatenpakets (N) anhand des gesendeten Schutzdatenpakets (S) durch die zweite der Systemkomponenten (2) erfolgt

FIG. 1

**Beschreibung**

Die Erfindung betrifft ein Verfahren zu einem Manipulationsschutz von über ein Bussystem zwischen mindestens zwei Systemkomponenten zu übertragenden Nutzdatenpaketen, wobei die Systemkomponenten jeweils eine Signierungs- und Signierungsprüfungseinheit umfassen, mittels welcher Datenpakete für Nutzdatenpakete erzeug- und prüfbar sind.

Seit einiger Zeit kommt es vermehrt zu Hackerangriffen auf die Bussysteme von Kraftfahrzeugen, bei welchen beliebige Daten beziehungsweise Datenpakete auf die Bussysteme, insbesondere auf das CAN-Bussystem des Kraftfahrzeugs gespielt werden, was zu einem abnormalen Fahrzeugverhalten führt oder führen kann. Durch derartige Hackerangriffe kann es zu einer Beschädigung des Kraftfahrzeuges beziehungsweise zu einer Beschädigung von Komponenten desselben kommen.

Im Stand der Technik existieren daher bereits einige Ansätze, welche auf den Schutz der Kommunikation zwischen den Systemkomponenten eines Bussystems gerichtet sind. Beispielsweise offenbart die DE 10 2009 002 396 A1 ein Verfahren zum Manipulationsschutz eines Sensors und von Sensordaten des Sensors, bei welchem im Rahmen der Authentifizierung der Sensordaten eine Zufallszahl von einem Steuergerät an den Sensor geschickt wird, wobei zur Erkennung einer Manipulation der Sensordaten die Sensordaten von dem Sensor zu dem Steuergerät mit einem kryptografischen Integritätsschutz versehen werden. Zusätzlich werden zu einer Verhinderung von Replay-Attacken den Sensordaten zusätzliche zeitvariante Parameter hinzugefügt. Ein sehr ähnliches Verfahren offenbart die DE 10 2009 045 133 A1.

Ferner offenbart die DE 10 2004 036 810 A1 ein Kommunikationsverfahren für wenigstens zwei Systemkomponenten des Bussystems eines Kraftfahrzeugs. Bei diesem Kommunikationsverfahren halten die Systemkomponenten jeweils eine vorgegebene feste Anzahl von nur ihnen bekannten Prüfcodes bereit. Basierend auf einem zeitveränderlichen Signal, welches beiden Systemkomponenten zugänglich ist, wird beim Fahrzeugstart von beiden Systemkomponenten über eine, vorliegend als Hash-Funktion ausgebildete, Zuordnungsfunktion einer der Prüfcodes ausgewählt und mit diesem die zu übertragenden Nutzdaten codiert. Des Weiteren existieren im Stand der Technik diverse, der Verschlüsselung von Nachrichten dienende Verfahren und Standards, von welchen der AUTOSAR Standard als ein Beispiel von vielen zu nennen ist.

Allerdings weisen all diese Verfahren und Standards Nachteile hinsichtlich ihrer Sicherheit oder hinsichtlich ihrer Handhabbarkeit auf. So lassen sich beispielsweise über ein CAN-Bussystem lediglich Datenpakete einer vorbestimmten, begrenzten Bitlänge übertragen, welche für die meisten der zuvor beschriebenen und im Stand der Technik bekannten Verschlüsselungsverfahren und -Standards zu gering ist. Ferner sind die genannten Verschlüsselungsverfahren und -Systeme meist auch hinsichtlich anderer Aspekte nicht für die in Kraftfahrzeugen zum Einsatz kommenden Bussysteme ausgelegt, bieten ein nicht ausreichendes Maß an Sicherheit oder erfordern eine starke Modifikation der zu übertragenden Nachricht. Insbesondere hybride Bussysteme wie das CAN-Bussystem, das CAN-FD-Bussystem oder Ethernet werden von den meisten der genannten Verfahren und Standards nicht oder nicht ausreichend berücksichtigt.

Der Erfindung liegt nun die Aufgabe zugrunde, ein Verfahren zu einem Manipulationsschutz von über ein Bussystem zwischen mindestens zwei Systemkomponenten zu übertragenden Nutzdatenpaketen zur Verfügung zu stellen, welches gegenüber dem Stand der Technik besser auf in einem Kraftfahrzeug zum Einsatz kommende Bussysteme zugeschnitten und von der maximalen Bitlänge der mittels dieser Bussysteme übertragbaren Datenpakete unabhängig ist.

Es wird ein Verfahren zu einem Manipulationsschutz von über ein Bussystem zwischen mindestens zwei Systemkomponenten zu übertragenden Nutzdatenpaketen zur Verfügung gestellt, bei welchem die Systemkomponenten jeweils eine Signierungs- und Signierungsprüfungseinheit umfassen, mittels welcher Datenpakete erzeug- und prüfbar sind. Im Rahmen des Verfahrens wird von einer ersten der Systemkomponenten ein eigenständiges Schutzdatenpaket mit Schutzinformationen für ein über das Bussystem zu übertragendes Nutzdatenpaket generiert, welches von diesem Nutzdatenpaket unabhängig, ihm jedoch gleichwohl eindeutig zuordenbar ist. Anschließend wird das generierte Schutzdatenpaket separat von dem zugehörigen Nutzdatenpaket über das Bussystem an die zweite der Systemkomponenten versendet. Ferner erfolgt eine Verifikation der Authentizität des übertragenden Nutzdatenpakets anhand des gesendeten Schutzdatenpakets durch die zweite der Systemkomponenten.

Bei einem derartigen Verfahren wird zusätzlich zu der zu schützenden Botschaft, also zusätzlich zu dem zu schützenden Nutzdatenpaket, eine weitere Schutzinformationen enthaltende Nachricht, dass Schutzdatenpaket, über das Bussystem übertragen. Die Schutzinformationen des Schutzdatenpakets werden kryptografisch generiert und können von der empfangenden Systemkomponente verifiziert werden. Dadurch werden die oben beschriebenen Hackerangriffe unmöglich.

Bevorzugt umfasst ein Datenpaket mindestens eine Information über die Wertigkeit mindestens eines Bits.

Bevorzugt wird auf die Versendung des Schutzdatenpakets folgend das Nutzdatenpaket, welchem das Schutzdatenpaket zuordenbar ist, von der ersten Systemkomponente an die zweite Systemkomponente übermittelt. Ferner bevorzugt werden das Nutzdatenpaket und das diesem zuordenbare Schutzdatenpaket zeitgleich versandt.

In einer bevorzugten Ausführungsform ist in den Signierungs- und Signierungsprüfungseinheiten der mindestens zwei Systemkomponenten jeweils mindestens ein identischer kryptografischer Schlüssel hinterlegt, mittels welchem versandte Schutzdatenpakete ver- und entschlüsselt werden. In einer derartigen Ausführung ist die Ver- und Entschlüsselung der Schutzdatenpakete mit demselben kryptografischen Schlüssel auf einfache aber dennoch sichere Art und Weise möglich.

Bevorzugt umfasst jedes Nutzdatenpaket, für welches ein Schutzdatenpaket generiert wird, einen Zähler mit einer Bitlänge von N Bit, welcher bei jeder Übermittlung des jeweiligen Nutzdatenpakets inkrementiert wird. Besonders bevorzugt wird der Zähler eines Nutzdatenpakets bei jeder Übermittlung desselben um 1 erhöht. Ferner bevorzugt wird der Zähler bei einem Überlauf auf einen Ausgangswert von Null zurückgesetzt. Dies trägt zu einem sicheren Schutz vor sogenannten Replay-Angriffen bei und ermöglicht eine einfache Zuordnung von Schutzdatenpaketen zu ihren jeweiligen Nutzdatenpaketen. Des Weiteren bevorzugt, umfasst auch das dem Nutzdatenpaket jeweils zuordenbare Schutzdatenpaket den von dem Nutzdatenpaket aufgewiesenen Zähler. Besonders bevorzugt wird das Verfahren für die Versendung von sogenannten ASIL-relevanten Nachrichten ausgeführt, das heißt für Nutzdatenpakete, welche für das sogenannte Automotive Safety Integrity Level (ASIL) relevant sind. Genauer ausgedrückt haben sogenannte klassifizierte ASIL-Datenpakete den Zähler bereits in sich enthalten. Diese Implementierung des Zählers im ASIL-Datenpaket wird durch ein in AUTOSAR verankertes Verfahren gewährleistet. Bei der sogenannten AUTOSAR, also bei der sogenannten AUTomotive Open System ARchitecture, handelt es sich um eine Softwarearchitektur, welche aus einer Entwicklungspartnerschaft aus Automobilherstellern, Steuergeräteherstellern sowie Herstellern von Entwicklungswerkzeugen, Steuergeräte-Basis-Software und Mikrocontrollern hervorgegangen ist. Bei dem Automotive Safety Integrity Level handelt es sich um ein Risikoklassifikationsschemata, welches durch die ISO 26262 definiert wird.

Vorzugsweise weist der Zähler eine Bitlänge von 4-Bit auf. Derartige kurze Zähler eignen, beziehungsweise ergeben sich, insbesondere dann, wenn es sich bei dem Bussystem, über welches die Nutzdatenpakete gemäß des erfindungsgemäßen Verfahrens versandt werden, um ein CAN-Bussystem handelt.

In einer bevorzugten Ausführungsform weist jedes Schutzdatenpaket sowie jedes Nutzdatenpaket jeweils einen, über die Zuordnung des jeweiligen Datenpaketes zu einer Prioritätsstufe entscheidenden Message-Identifier auf, wobei der Wert des Message-Identifiers eines Schutzdatenpakets derart naheliegend zu dem Wert des Message-Identifiers des diesem zuordenbaren Nutzdatenpakets gewählt ist, dass das Nutzdatenpaket und das zuordenbare Schutzdatenpaket derselben oder unmittelbar zueinander benachbarten Prioritätsstufen zugeordnet werden. Mit anderen Worten ausgedrückt, weisen sowohl ein Nutzdatenpaket als auch das diesem zuordenbare Schutzdatenpaket bussystemintern die gleiche oder eine nahe beieinanderliegende Priorisierung auf. Hierdurch wird vermieden, dass beispielsweise bei einer hohen Auslastung des Bussystems nur eines der beiden Datenpakete die jeweils empfangende Systemkomponente erreicht.

Bevorzugt werden über dasselbe Bussystem auch nicht durch Schutzdatenpakete zu verifizierende Nutzdatenpakete zwischen den mindestens zwei Systemkomponenten übermittelt, für welche keine Schutzdatenpakete generiert und versendet werden. Dadurch kann eine unnötige Mehrbelastung des Bussystems vermieden werden, da eine Verifikation der Authentizität eines übertragenden Nutzdatenpakets nur dann erfolgt, wenn diese tatsächlich von Nöten ist. Bevorzugt umfasst das erfindungsgemäße Verfahren ferner den Schritt des Einteilens und Festlegens der über das Bussystem zu übermittelnden Nutzdatenpakete, in welchem alle über das Bussystem übermittelbaren Nutzdatenpakete nach funktionalen Kriterien in funktionale Gruppen eingeteilt werden, und für jede der so erhaltenen Gruppen festgelegt wird, ob für die zu ihr zählenden Nutzdatenpakete Schutzdatenpakete generiert und übermittelt werden. Bevorzugt ist im Schritt des Einteilens und Festlegens die Auswahl und Festlegung vorbestimmt oder von einem Nutzer individuell vornehmbar. Bei einer derartigen Ausführung des Verfahrens kann ein Nutzer des Bussystems entscheiden, für welche Nutzdatenpakete beziehungsweise für welche funktionale Gruppe von Nutzdatenpaketen zuordenbare Schutzdatenpakete erzeugt werden. Eine funktionale Gruppe kann beispielsweise alle Nutzdatenpakete umfassen, welche Informationen beziehungsweise Daten zu einer systemintern hinterlegten Wegstrecke eines Kraftfahrzeugs aufweisen.

Vorzugsweise weisen die mindestens zwei Systemkomponenten eine auf eine gemeinsame Systemzeit synchronisierte Zeiteinheit auf. Dies ermöglicht in einer möglichen Ausführungsalternative des erfindungsgemäßen Verfahrens auf einfache Art und Weise einen Schutz vor sogenannten Replay-Angriffen auf das Bussystem.

In einer bevorzugten Ausführungsform wird das Schutzdatenpaket über die Systemzeit und über zumindest einen Teil der Nutzdaten desjenigen zu übertragenden Nutzdatenpakets gebildet, welchem das Schutzdatenpaket zuordenbar ist. In einer derartigen Ausführung umfasst das Schutzdatenpaket die durch die synchronisierte Zeiteinheit bereitgestellte Zeitinformation, sodass der Inhalt des Schutzdatenpaketes von der empfangenden Systemkomponente abgeglichen und verifiziert werden kann. Bevorzugt entspricht die aktuelle Systemzeit einem Zeitstempel.

Bevorzugt gewährleistet das erfindungsgemäße Verfahren, dass sich der Zähler eines Nutzdatenpakets während der Gültigkeit eines bestimmten Zeitstempels nicht wiederholt. Andernfalls wäre ein Schutz vor Replay-Angriffen nicht gewährleistet. Ferner bevorzugt ist die Inkrementierungsfrequenz des Zeitstempels dementsprechend derart an die Sendefrequenz der Nutzdatenpakete angepasst gewählt, dass sich der Zähler eines Nutzdatenpakets während der Gültigkeit eines bestimmten Zeitstempels nicht wiederholt. Wird beispielsweise eine Nachricht mit 100Hz ausgesendet und der Zähler ist 4 Bit lang, umfasst also 16 Werte, so läuft der Zähler alle 160 Millisekunden über: Es wird eine Nachricht alle 10ms versandt (vgl. Sendefrequenz von 100Hz), sodass sich bei 16 verschiedenen Werten für den Zähler ein Überlauf nach 16 Nachrichten, also alle 160ms ergibt. Würde nun also der Zeitstempel um lediglich 1 Hz Takt erhöht, so würde sich innerhalb dieses Zeitfensters der Nachrichtenzähler mehrmals wiederholen. Aus diesem Grund wird die Inkrementierungsfrequenz des Zeitstempels wie oben vorgeschlagen gewählt.

Bevorzugt umfasst das Verfahren ferner den Schritt der Ausführung einer Challenge-Response Authentifizierung zwischen den mindestens zwei Systemkomponenten, wobei eine generierte Zufallszahl von einer der mindestens zwei Systemkomponenten an die andere der mindestens zwei Systemkomponenten übermittelt und die Antwort auf selbige zur Authentifizierung verwandt wird. In einer derartigen Ausführung wird das Schutzdatenpaket unter anderem über die generierte Zufallszahl, also über die generierter Challenge gebildet und zur Authentifizierung verwandt. Das Schutzdatenpaket fungiert hier als Response auf die Challenge. Ferner bevorzugt wird im Schritt der Ausführung der Challenge-Response Authentifizierung eine nonce, also eine number used only once von einer der mindestens zwei Systemkomponenten an die andere der mindestens zwei Systemkomponenten übermittelt und die Antwort auf selbige zur Authentifizierung verwandt. Ferner bevorzugt wird im Schritt der Ausführung der Challenge-Response Authentifizierung eine beliebige Challenge von einer der mindestens zwei Systemkomponenten an die andere der mindestens zwei Systemkomponenten übermittelt und die Antwort auf selbige zur Authentifizierung verwandt. Eine derartigen Challenge-Response Authentifizierung erfüllt hohe Sicherheitsstandards und trägt zu einer sicheren und vor Hackerangriffen gut geschützten Kommunikation zwischen den Systemkomponenten des Bussystems bei. In einer derartigen Ausführung kann die Zufallszahl den Zeitstempel zur Realisierung eines Replay-Schutzes ersetzen, sodass auf eine synchronisierte Zeiteinheit verzichtet werden kann.

Vorzugsweise wird das Schutzdatenpaket über die generierte Zufallszahl und über zumindest einen Teil der Nutzdaten desjenigen zu übertragenden Nutzdatenpakets gebildet, welchem das Schutzdatenpaket zuordenbar ist. Ferner bevorzugt wird das Schutzdatenpaket über die nonce, also über eine number used only once und über zumindest einen Teil der Nutzdaten desjenigen zu übertragenden Nutzdatenpakets gebildet, welchem das Schutzdatenpaket zuordenbar ist. Ferner bevorzugt wird das Schutzdatenpaket über die Challenge und über zumindest einen Teil der Nutzdaten desjenigen zu übertragenden Nutzdatenpakets gebildet, welchem das Schutzdatenpaket zuordenbar ist. In dieser Ausführungsalternative des erfindungsgemäßen Verfahrens ist das Bussystem ebenfalls vor Replay-Angriffen geschützt, wodurch sich die Sicherheit der geschützten Nachricht weiter erhöht.

In einer bevorzugten Ausführungsform wird das Schutzdatenpaket ferner über den Zähler sowie über den Message-Identifier desjenigen Nutzdatenpakets gebildet, welchem das Schutzdatenpaket zuordenbar ist.

Des Weiteren bevorzugt wird das Schutzdatenpaket ferner über den Zähler sowie über den Message-Identifier des Schutzdatenpakets gebildet. In einer derartigen Weiterentwicklung des Verfahrens werden nicht nur die übermittelten Daten abgesichert, sondern wird auch der Kanal der Übertragung verifiziert.

Bevorzugt wird für ein zu schützendes Nutzdatenpaket ein Message Authentication Code berechnet und in dem dem Nutzdatenpaket zuordenbaren Schutzdatenpaket übertragen.. Der Message Authentication Code ist eine Signatur, welche mit einem gemeinsamen kryptografischen Schlüssel berechnet und verbatim übertragen wird. Durch die Berechnung eines solchen MAC, also eines Message Authentication Codes, wird ein Integritätsschutz der Daten auf effiziente und sichere Art und Weise möglich. Besonders bevorzugt wird bei der Berechnung des Message Authentication Codes ein EMAC oder ein OMAC berechnet, also ein sogenannter Encrypted MAC (EMAC) oder ein One-Key MAC (OMAC).

Des Weiteren bevorzugt ist in den Signierungs- und Signierungsprüfungseinheiten der mindestens zwei Systemkomponenten ferner jeweils mindestens ein identischer kryptografischer Schlüssel hinterlegt, welcher der Berechnung eines Message Authentication Codes dient.

Vorzugsweise werden Nutzdatenpakete, deren Authentizität anhand des diesen jeweils zuordenbaren Schutzdatenpakets nicht verifizierbar ist, verworfen. Auf diese Art und Weise werden lediglich Nutzdatenpakete mit einer tatsächlichen Existenzberechtigung zugelassen und verwertet, worin der Schutz vor Hackerangriffen gerade gewährleistet wird.

In einer bevorzugten Ausführungsform weist der Message Authentication Code eine Bitlänge von 60 Bit auf. Dies bildet einen wesentlichen Unterschied zum Stand der Technik. Bei den im Stand der Technik bestehenden Systemen wurden die Schutzdaten stets in der gleichen Nachricht übermittelt, in welcher auch die Nutzdaten transportiert wurden. Um dies gewährleisten zu können, mussten die bestehenden Formate regelmäßig angepasst werden, um innerhalb der Nachrichten beziehungsweise Nutzdatenpakete den benötigten Raum für die zusätzlichen Schutzdaten zu schaffen. Somit war im Stand der Technik meist eine starke Modifikation der zu übertragenden Nachrichten beziehungsweise Nutzdatenpakete notwendig, während es das erfindungsgemäße Verfahren ermöglicht, die übermittelten beziehungsweise die zu übermittelnden Nachrichten beziehungsweise Nutzdatenpakete entweder vollständig oder zumindest weitgehend unberührt zu belassen. Beispielsweise kann im Falle des zuvor beschriebenen Ausführungsbeispiels einfach eine neue Nachricht, das Schutzdatenpaket, versandt werden, während von der Originalnachricht lediglich ein 4 Bit Zähler verlangt wird. Einen derartigen 4 Bit Zähler weist die Originalnachricht, sofern es sich um ein ASIL-Datenpaket handelt, entweder ohnehin schon auf, oder er kann der Originalnachricht mit lediglich geringem Aufwand hinzugefügt werden.

Bevorzugt ist das Bussystem ein CAN-Bussystem. Bei einem CAN-Bussystem, also einem Controller Area Network-Bussystem handelt es sich um ein kostengünstiges, serielles Bussystem, welches robust, leicht zu konfigurieren und zu erweitern ist und eine automatische Fehlererkennung aufweist.

Bevorzugt können die signierten Daten auch über eine zusätzliche Stromchiffre verschlüsselt werden. Dabei müssen die Daten erst signiert und dann verschlüsselt werden. Des Weiteren bevorzugt dient als Initialisierungsvektor der Stromchiffre zumindest ein Teil des N-Bit umfassenden Zeitstempels oder ein Teil der N-Bit umfassenden Zufallszahl/Challenge und zumindest ein Teil eines N-Bit umfassenden Message Authentication Code (MAC), wobei $N \in \mathbb{N}$ ist. Besonders bevorzugt dienen als Initialisierungsvektor der Stromchiffre der 56-Bit Zeitstempel und der 56-Bit Message Authentication Code (MAC) der Nachricht.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1    eine schematische Darstellung des Austausches von einem Nutzdatenpaket N zwischen zwei Systemkomponenten eines Bussystems nach einem ersten Ausführungsbeispiel eines erfindungsgemäßen Verfahrens,

Figur 2    ein Ablaufdiagramm eines zweiten Ausführungsbeispiels eines erfindungsgemäßen Verfahrens,

Figur 3    eine schematische Darstellung der Nachrichtenstrukturen von im ersten beziehungsweise zweiten Ausführungsbeispiel eines erfindungsgemäßen Verfahrens erzeug- und übermittelbaren Datenpaketen, und

Figur 4    zwei verschiedene Berechnungsgrundlagen von Message Authentication Codes für zwei verschiedene Ausführungsbeispiele erfindungsgemäßer Verfahren.

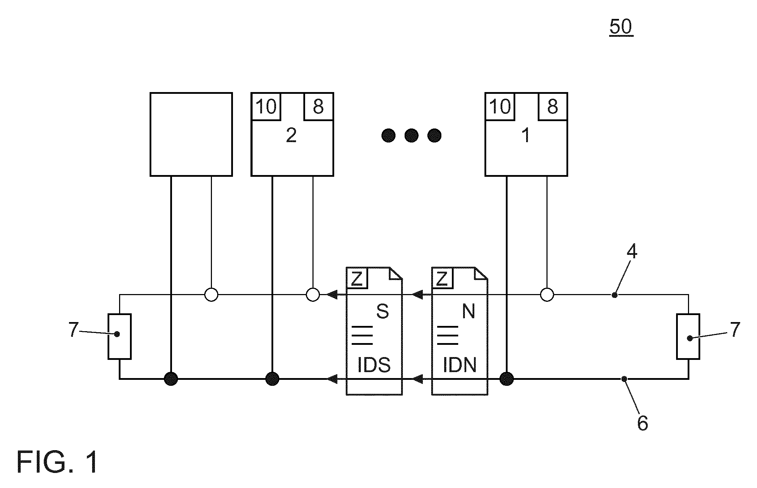

Figur 1 zeigt eine schematische Darstellung des Austausches von einem Nutzdatenpaket N zwischen zwei Systemkomponenten 1,2 eines Bussystems 50 nach einem ersten Ausführungsbeispiel eines erfindungsgemäßen Verfahrens. In diesem ersten Ausführungsbeispiel wird das Verfahren für ein Bussystem 50 ausgeführt, welches eine Vielzahl von Systemkomponenten 1, 2 aufweist, von welchen in Figur 1 jedoch lediglich drei dargestellt sind. Die restlichen der Systemkomponenten des Bussystems 50 sind in Figur 1 über drei Punkte angedeutet. Bei dem in Figur 1 dargestellten Bussystem 50 handelt es sich rein beispielhaft um ein CAN-Bussystem eines Kraftfahrzeugs, welches eine sogenannte CAN-High-Leitung 4 und eine CAN-Low-Leitung 6 umfasst, welche an ihren Enden jeweils durch einen sogenannten Terminierungswiderstand 7 abgeschlossen sind, um Signalreflexionen an den Leitungsenden zu vermeiden. In Figur 1 sind die Datenpakete N, S schematisch als Dokument-Symbole dargestellt, die über die CAN-Leitungen 4, 6 versandt werden, was in Figur 1 durch Pfeile auf den CAN-Leitungen 4, 6 dargestellt ist.

In diesem ersten Ausführungsbeispiel des Verfahrens kommunizieren eine erste und eine zweite Systemkomponente 1, 2 über das CAN-Bussystem 50 miteinander, wobei die erste Systemkomponente 1 ein Nutzdatenpaket N an die zweite Systemkomponente 2 übermittelt. In diesem ersten Ausführungsbeispiel handelt es sich bei der ersten Systemkomponente 1 rein beispielhaft um ein Steuergerät eines Kraftfahrzeugs, während es sich bei der zweiten Systemkomponente 2 um einen Aktor innerhalb des Kraftfahrzeuges handelt, welcher über das CAN-Bussystem 50 mit dem Steuergerät elektrisch leitfähig verbunden ist. Das Verfahren kann aber auch für die Kommunikation zwischen beliebigen anderen Systemkomponenten ausgeführt werden, welche auch über völlig andere Bussysteme 50 miteinander verbunden sein können. Nutzdatenpakete N, welche über das Bussystem 50 von dem Steuergerät an den Aktor übermittelt werden, umfassen in diesem ersten Ausführungsbeispiel als Nutzdaten rein beispielhaft Betriebsdaten für den Aktor.

Sowohl die erste als auch die zweite Systemkomponente 1, 2 weisen jeweils eine Signierungs- und Signierungsprüfungseinheit 10 auf, mittels welcher Datenpakete erzeug- und prüfbar sind. Optional können sowohl die erste als auch die zweite Systemkomponente 1, 2 jeweils eine Signierungseinheit und/oder eine Verifikationseinheit aufweisen. Mit anderen Worten ausgedrückt, stellen beide Systemkomponenten 1, 2 jeweils eine Verschlüsselungsfunktion und eine Entschlüsselungsfunktion bereit, mittels welcher Datenpakte verschlüsselbar und entschlüsselbar beziehungsweise erzeug- und prüfbar sind. Ferner bevorzugt wird beiden Systemkomponenten 1, 2 jeweils eine Verschlüsselungsfunktion und eine Entschlüsselungsfunktion bereit gestellt, mittels welcher Datenpakete verschlüsselbar und entschlüsselbar sind. In einem ersten Schritt des erfindungsgemäßen Verfahrens wird von der ersten Systemkomponente 1, hier rein beispielhaft dem Steuergerät, ein eigenständiges Schutzdatenpaket S mit Schutzinformationen, welche auch als sogenannte Signaturdaten bezeichnet werden, für ein über das Bussystem 50 zu übertragendes Nutzdatenpaket N generiert, welches von diesem Nutzdatenpaket N unabhängig, ihm jedoch gleichwohl eindeutig zuordenbar ist. Mit anderen Worten ausgedrückt generiert die erste Systemkomponente 1 beziehungsweise das Steuergerät für das über das Bussystem 50 zu versendende Nutzdatenpaket N eine Signatur, also das Schutzdatenpaket S.

In einem sich anschließenden Schritt des Verfahrens wird das generierte Schutzdatenpaket S separat von dem zugehörigen Nutzdatenpaket N über das Bussystem 50 an die zweite der Systemkomponenten 2, also in diesem ersten Ausführungsbeispiel rein beispielhaft an den Aktor versendet. Das Schutzdatenpaket S ist also nicht mit dem Nutzdatenpaket N verbunden und kann vollständig getrennt von diesem versendet und empfangen werden. Die zweite Systemkomponente 2, also der Aktor, empfängt das Schutzdatenpaket S, woraufhin das Nutzdatenpaket N, welchem das Schutzdatenpaket S zugeordnet ist, von der ersten Systemkomponente 1 an die zweite Systemkomponente 2 übermittelt wird und in einem dritten Verfahrensschritt eine Verifikation der Authentizität des übertragenden Nutzdatenpakets N anhand des gesendeten Schutzdatenpakets S durch die zweite der Systemkomponenten 2 erfolgt. In diesem ersten Ausführungsbeispiel ist in den Signierungs- und Signierungsprüfungseinheiten 10 der mindestens zwei Systemkomponenten 1, 2 jeweils ein kryptografischer Schlüssel hinterlegt, mittels welchem versandte, zu schützende Datenpakete ver- und entschlüsselt beziehungsweise erzeugt - und geprüft werden. Die zweite Systemkomponente 2 entschlüsselt also Datenpakete mit demselben kryptografischen Schlüssel, mittels welchem die Datenpakete von der ersten Systemkomponente 1 verschlüsselt wurden. Mit anderen Worten ausgedrückt, entschlüsselt die zweite Systemkomponente 2 die Datenpakete mit einem kryptografischen Schlüssel, welcher zu demjenigen kryptografischen Schlüssel korrespondiert, mittels welchem die Datenpakete von der ersten Systemkomponente 1 verschlüsselt wurden.

In diesem ersten Ausführungsbeispiel des Verfahrens kann jedes Schutzdatenpakt S, welches für ein Nutzdatenpaket N erzeugt und über das Bussystem 50 versandt wird, eindeutig seinem jeweiligen Nutzdatenpaket N zugeordnet werden. Dies erfolgt, indem jedes Nutzdatenpaket N, für welches ein Schutzdatenpaket S generiert wird, einen Zähler Z mit einer Bitlänge von N Bit umfasst, welcher bei jeder Übermittlung des jeweiligen Nutzdatenpakets N inkrementiert wird. In diesem Ausführungsbeispiel umfasst auch das Schutzdatenpaket S rein beispielhaft den im zugehörigen Nutzdatenpaket N enthaltenden Zähler Z, sodass die eindeutige Zuordnung über den Zähler Z, welcher in beiden Datenpaketen identisch ist, erfolgt. In diesem ersten Ausführungsbeispiel wird der ferner oft auch als Counter bezeichnete Zähler Z bei jeder Versendung des jeweiligen Nutzdatenpakets N beziehungsweise Schutzdatenpakets S über das Bussystem 50 um 1 erhöht. Da das Schutzdatenpaket S über das Nutzdatenpaket N gebildet wird und der Zähler Z auch im Schutzdatenpaket S enthalten ist, lässt sich das Schutzdatenpaket S über den Stand des Zählers Z direkt und eindeutig einem Nutzdatenpaket N zuordnen. In diesem ersten Ausführungsbeispiel weist der Zähler Z rein beispielhaft eine Bitlänge von 4-Bit auf. Es können allerdings auch andere Zähler mit einer anderen Bitlänge verwandt werden. Ferner können erfindungsgemäße Verfahren ausgeführt werden, bei welchen der Zähler Z nicht vollständig im Nutzdatenpaket N abgebildet, sondern über die involvierten Systemkomponenten 1, 2 jeweils berechnet wird. Ferner trägt die Verwendung des Zählers Z auch zu einem Replay-Schutz vor Hackerangriffen bei. In diesem ersten Ausführungsbeispiel wird der Zähler Z rein beispielhaft bei einem Überlauf auf einen Wert von 0 zurückgesetzt.

Ferner ist bei dem erfindungsgemäßen Verfahren gewährleistet, dass ein Schutzdatenpaket S sowie das zugehörige Nutzdatenpaket N von einer empfangenden Systemkomponente 1, 2 auch empfangen wird und die Kommunikation über das Bussystem 50 somit robust funktioniert. Im Rahmen des erfindungsgemäßen Verfahrens wird dies dadurch gewährleistet, dass jedes Schutzdatenpaket S sowie jedes Nutzdatenpaket N jeweils einen, über die Zuordnung des jeweiligen Datenpaketes S, N zu einer Prioritätsstufe entscheidenden Message-Identifier IDS, IDN aufweist, wobei der Wert des Message-Identifiers IDS eines Schutzdatenpakets S derart naheliegend zu dem Wert des Message-Identifiers IDN des diesem zuordenbaren Nutzdatenpakets N gewählt ist, dass das Nutzdatenpaket N und das zuordenbare Schutzdatenpaket S derselben oder unmittelbar zueinander benachbarten Prioritätsstufen zugeordnet werden. In diesem ersten Ausführungsbeispiel entsprechen die oft auch als Objekt-Identifier bezeichneten Message-Identifier IDS, IDN der sogenannten CAN-ID der Signatur, also der CAN-ID des Schutzdatenpakets S beziehungsweise der CAN-ID des Nutzdatenpakets N. Die CAN-IDs bilden die Message-Identifier der über das CAN-Bussystem 50 übermittelten Datenpakete S, N. Die Werte dieser beiden zuletzt genannten CAN-IDs werden derart naheliegend zueinander gewählt, dass das Schutzdatenpaket S der gleichen Prioritätsstufe wie das Nutzdatenpaket N oder alternativ das Schutzdatenpaket S und das Nutzdatenpaket N zu direkt zueinander benachbarten bussysteminternen Prioritätsstufen zugeordnet werden.

In diesem ersten Ausführungsbeispiel des Verfahrens werden nicht alle über das Bussystem 50 zu übermittelnden beziehungsweise übermittelbaren Nutzdatenpakete N durch die Generation und Versendung eines Schutzdatenpakets S abgesichert. Es können im Rahmen des erfindungsgemäßen Verfahrens auch Nutzdatenpakete N über das Bussystem 50 versandt werden, für welche kein Schutzdatenpaket S generiert und versandt wird und für welche somit also keine Verifikation ihrer Authentizität anhand eines Schutzdatenpakets S erfolgt. Dabei ist über den Message-Identifier IDN eines Nutzdatenpakets N festgelegt, ob für das jeweilige Nutzdatenpaket N ein Schutzdatenpaket S erzeugt wird oder nicht. So erfolgt die Erzeugung von Schutzdatenpaketen S ausschließlich für Nutzdatenpakete N mit bestimmtem, von Nutzdatenpaket N zu Nutzdatenpaket N identischem Message Identifier IDN. Wird für einen bestimmten Message-Identifier IDN, beispielsweise für einen Message-Identifier IDN mit einem Zählerwert von 5, ein Schutzdatenpaket S erzeugt, so wird für alle Nutzdatenpakete N mit diesem Zählerwert stets ein Schutzdatenpaket S erzeugt. Hingegen kann für Nutzdatenpakete N mit einem anderen, beispielsweise von dem Zählerwert 5 abweichenden Message-Identifier IDN festgelegt sein, dass für diese Nutzdatenpakete N keine Schutzdatenpakete S erzeugt werden. Dabei ist hier der Nachrichtenzähler gemeint. Bevorzugt wird in einer speziellen Ausführungsvariante des Verfahrens nur für Nachrichten mit dem Zähler Z 2, 4, 6 etc. auch ein Schutzdatenpaket versandt.

In diesem ersten Ausführungsbeispiel sind alle über das Bussystem übermittelbaren Nutzdatenpakete N nach funktionalen Kriterien in funktionale Gruppen eingeteilt. Für jede der so erhaltenen funktionalen Gruppen ist festgelegt, ob für die in ihr enthaltenden Nutzdatenpakete N Schutzdatenpakete S generiert und übermittelt werden. Die Festlegung der funktionalen Gruppen ist in diesem ersten Ausführungsbeispiel rein beispielhaft vorbestimmt. Sie kann in anderen Ausführungsbeispielen erfindungsgemäßer Verfahren aber auch von einem Nutzer individuell vornehmbar gestaltet sein. Bei einer derartigen Ausführung eines erfindungsgemäßen Verfahrens kann ein Nutzer des Bussystems 50 vorab entscheiden, für welche Nutzdatenpakete N beziehungsweise für welche funktionale Gruppe von Nutzdatenpaketen N zuordenbare Schutzdatenpakete S erzeugt werden. In diesem Ausführungsbeispiel umfasst eine funktionale Gruppe rein beispielhaft alle Nutzdatenpakete N, welche Informationen beziehungsweise Daten zu einer systemintern hinterlegten Wegstrecke beziehungsweise zur Ermittlung einer solchen umfassen. Eine andere funktionale Gruppe umfasst in diesem Ausführungsbeispiel rein beispielhaft alle Nutzdatenpakete N, welche Informationen beziehungsweise Daten zu einer autonomen Fahrt des Kraftfahrzeugs umfassen. Werden Nutzdatenpakete N aus einer dieser zuvor erwähnten funktionalen Gruppen generiert und versandt, wird stets auch ein den Nutzdatenpaketen N jeweils zuordenbares Schutzdatenpaket S generiert und versandt. Die Authentifizierung der Daten erfolgt nur innerhalb dieser funktionalen Gruppen über Gruppenschlüssel. Ferner können die Nutzdatenpakete N in anderen Ausführungsformen erfindungsgemäßer Verfahren auch in nichtfunktionale Gruppen unterteilt werden, welche anhand von anderen als den oben dargelegten Kriterien gebildet werden.

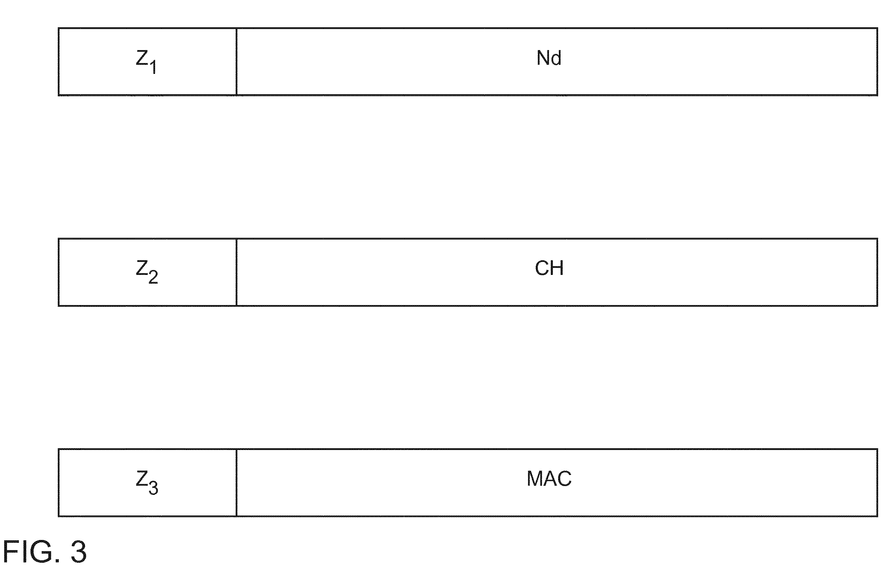

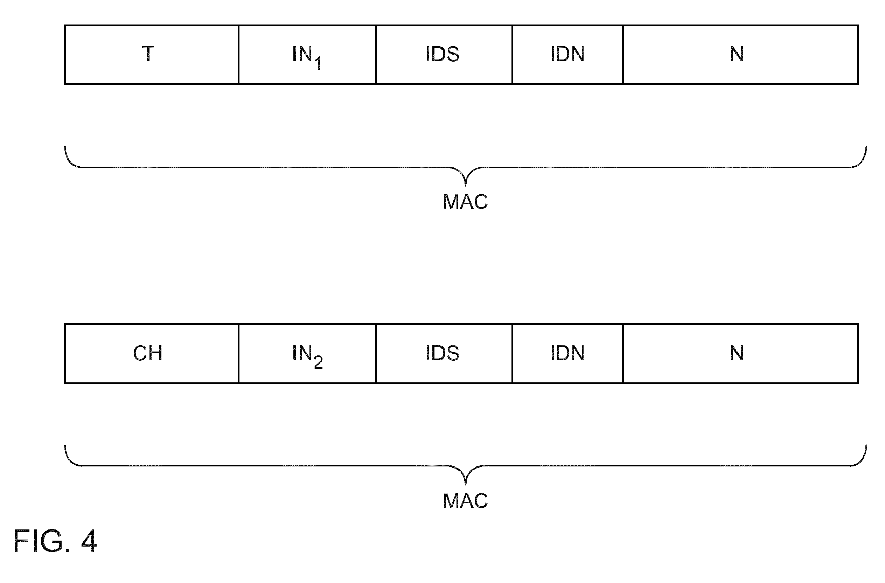

In diesem ersten Ausführungsbeispiel eines erfindungsgemäßen Verfahrens ist die Kommunikation zwischen den Systemkomponenten 1, 2 vor einem Replay-Angriff geschützt. Allgemein kann dies im Rahmen des erfindungsgemäßen Verfahrens insbesondere durch einen sogenannten globalen Zeitstempel oder durch die Ausführung eines Challenge-Response-Verfahrens erfolgen. In diesem ersten Ausführungsbeispiel des Verfahrens weisen die zwei Systemkomponenten 1, 2 jeweils eine auf eine gemeinsame Systemzeit T synchronisierte Zeiteinheit 8 auf. In diesem ersten Ausführungsbeispiel des erfindungsgemäßen Verfahrens wird die globale Systemzeit T bei der Bildung eines Schutzdatenpakets S berücksichtigt. Eine genauere Beschreibung der Bildung von Schutzdatenpaketen S ist insbesondere der noch folgenden Beschreibung zu den Figuren 3 und 4 entnehmbar.

Anstelle des globalen Zeitstempels kann im Rahmen anderer Ausführungsbeispiele erfindungsgemäßer Verfahren wie bereits erwähnt auch eine Challenge-Response-Authentifizierung zwischen den mindestens zwei Systemkomponenten 1, 2 durchgeführt werden. Im Rahmen dieser Challenge-Response Authentifizierung wird eine generierte Zufallszahl CH zwischen den zwei Systemkomponenten 1, 2 ausgetauscht die Antwort auf selbige zur Authentifizierung verwandt. Diese Zufallszahl CH wird oft auch als Challenge, als Anfrage oder als nonce, also als number used only once bezeichnet.

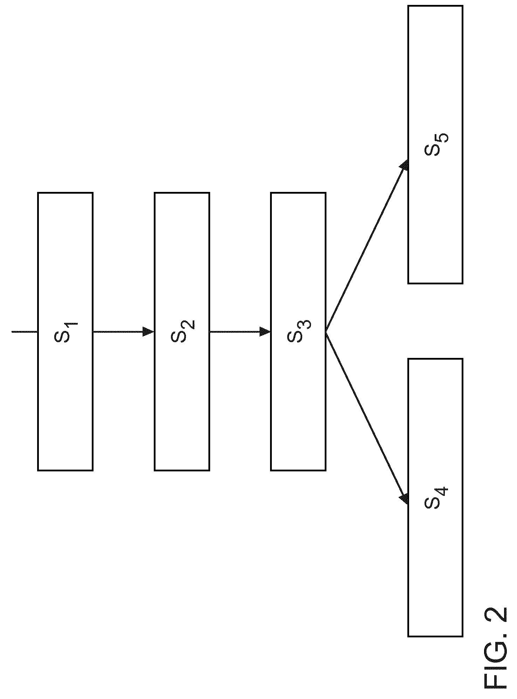

Figur 2 zeigt ein Ablaufdiagramm eines zweiten Ausführungsbeispiels eines erfindungsgemäßen Verfahrens. Das Ablaufdiagramm umfasst in diesem Ausführungsbeispiel rein beispielhaft insgesamt drei stets auszuführende Verfahrensschritte S1 bis S3, sowie einen nach einer Fallunterscheidung auszuführenden Verfahrensschritt S4 beziehungsweise S5. Das Verfahren ist dabei im Wesentlichen identisch zu dem zuvor beschriebenen. Abermals dient das Verfahren zu einem Manipulationsschutz von über ein Bussystem 50 zwischen mindestens zwei Systemkomponenten 1, 2 zu übertragenden Nutzdatenpaketen N, wobei die Systemkomponenten 1, 2 jeweils eine Signierungs- und Signierungsprüfungseinheit 10 umfassen, mittels welcher Datenpakete erzeug- und prüfbar sind (siehe oben und Figur 1).

In einem ersten Schritt S1 des Verfahrens wird in diesem zweiten Ausführungsbeispiel, wie zuvor bereits beschrieben, von einer ersten der Systemkomponenten 1 ein eigenständiges Schutzdatenpaket S mit Schutzinformationen für ein über das Bussystem 50 zu übertragendes Nutzdatenpaket N generiert, welches von diesem Nutzdatenpaket N unabhängig, ihm jedoch gleichwohl eindeutig zuordenbar ist. In einem zweiten Schritt S2 des Verfahrens wird das generierte Schutzdatenpaket S separat von dem zugehörigen Nutzdatenpaket N an die zweite der Systemkomponenten 2 über das Bussystem 50 versendet. Im Anschluss daran wird das Nutzdatenpaket N, welchem das Schutzdatenpaket S zuordenbar ist, von der ersten Systemkomponente 1 an die zweite Systemkomponente 2 übermittelt. Dies kann entweder im Rahmen des zweiten Verfahrensschritts S2 oder als eigenständiger Schritt des Verfahrens (nicht dargestellt in Figur 2) erfolgen. In einem dritten Verfahrensschritt S3 erfolgt eine Verifikation der Authentizität des übertragenden Nutzdatenpakets N anhand des gesendeten Schutzdatenpakets S durch die zweite der Systemkomponenten 2. Dazu wird das Schutzdatenpaket S mit dem ebenfalls von dieser zweiten Systemkomponente 2 empfangenen Nutzdatenpaket N abgeglichen.

Auf dieser Stufe des Verfahrens wird in diesem zweiten Ausführungsbeispiel desselben eine Fallunterscheidung vorgenommen. Ergibt die Verifikation des Nutzdatenpakets N anhand des Schutzdatenpakets S im dritten Verfahrensschritt S3 des Verfahrens, dass das dem Schutzdatenpaket S zuordenbare Nutzdatenpaket N authentisch ist, also tatsächlich von der ersten Systemkomponente 1 mit Berechtigung versandt wurde, so wird das Nutzdatenpaket N von der zweiten Systemkomponente 2 akzeptiert und, sofern gegeben, ausgeführt. Enthält das Nutdatenpaket N beispielsweise Steuerdaten für einen Aktor, so werden diese nach erfolgreicher Verifikation im vierten Verfahrensschritt S4 umgesetzt beziehungsweise ausgeführt. Ergibt die Verifikation anhand des Schutzdatenpakets S im dritten Verfahrensschritt S3 des Verfahrens hingegen, dass das dem Schutzdatenpaket S zuordenbare Nutzdatenpaket N nicht authentisch ist, also nicht von der ersten Systemkomponente 1 versandt wurde, so wird das Nutzdatenpaket N von der zweiten Systemkomponente 2 verworfen und nicht weiter berücksichtigt. Insbesondere werden - sofern gegeben - die in dem jeweiligen Nutzdatenpaket N enthaltenen Steuerinformationen nicht umgesetzt.

Figur 3 zeigt eine schematische Darstellung der Nachrichtenstrukturen von im ersten beziehungsweise zweiten Ausführungsbeispiel des erfindungsgemäßen Verfahrens erzeug- und übermittelbaren Datenpaketen. In Figur 3 sind genauer ausgedrückt drei verschiedene Nachrichtenstrukturen von Datenpaketen dargestellt. Wie sich eine bestimmte Nachrichtenstruktur eines bestimmten Datenpakets gestaltet ist insbesondere abhängig davon, um was für ein Datenpaket es sich handelt beziehungsweise welcher Zweck mit selbigem verfolgt wird. Allgemein umfasst jedes Datenpaket einen Zähler Z, welcher der Zuordnung zwischen Datenpaketen und dem Replay-Schutz dient. Bei den Nutzdaten Nd, welche auch als Payload bezeichnet werden, handelt es sich um die mittels des Schutzdatenpakets S zu schützenden und zu verschlüsselnden Daten. In den zuvor beschriebenen Ausführungsbeispielen erfolgt die Verschlüsselung der Schutzdatenpakete S rein beispielhaft über die Berechnung eines Message Authentication Codes MAC. Welche der bereits erwähnten Daten beziehungsweise Datenpaketbestandteile dabei in die Berechnung des Message Authentication Codes MAC einfließen, wird weiter unten dargestellt (siehe Fig. 4). Es ist der oben erwähnte kryptografische Schlüssel, mittels welchem die Datenpakete von der ersten Systemkomponente 1 verschlüsselt und mittels der zweiten Systemkomponente 2 entschlüsselt werden, welcher zur Erzeugung des Message Authentication Codes MAC verwandt wird. Zur Verschlüsselung können ferner auch noch weitere, separate kryptografische Schlüssel hinterlegt sein.

Die oberste in Figur 3 dargestellte Nachrichtenstruktur stellt die Nachrichtenstruktur eines über das Bussystem 50 übermittelbaren Nutzdatenpakets N dar und setzt sich aus den Nutzdaten Nd, also der Payload, und dem Zähler $Z_1$ zusammen. Gemäß dem erfindungsgemäßen Verfahren kann das Nutzdatenpaket N in vorteilhafterweise im Rahmen des Verfahrens unverändert oder lediglich mit geringfügigen Änderungen von der ersten Systemkomponente 1 an die zweite Systemkomponente 2 des Bussystems 50 übermittelt werden. Sollen dem ASIL, also dem Automotive Safety Integrity Level zuordenbare Nutzdatenpakete N über das Bussystem 50 übermittelt werden, entspricht der Zähler $Z_1$ des Nutzdatenpakets N dem sogenannten ASIL-Zähler beziehungsweise dem ASIL-Counter, welcher bei sogenannten ASIL-Nachrichten beziehungsweise ASIL-Nachrichtenpaketen stets vorgesehen ist. Bei derartigen Nutzdatenpaketen N kann selbiges vollständig unverändert übermittelt werden. Wird ein Challenge-Response Verfahren durchgeführt, so wird der Zähler $Z_1$ durch die die Nutzdaten empfangende der Systemkomponenten 2 vorgegeben. Bei sonstigen zu übertragenden Nutzdatenpaketen N beziehungsweise Nachrichten entspricht der Zähler $Z_1$ einer Zufallszahl mit einer Bitlänge von 4 Bit. Die Nutzdaten Nd können insbesondere eine Bitlänge zwischen 60 Bit, zum Beispiel bei CAN-Nachrichten, und 252 Bit, zum Beispiel bei CAN-FD-Nachrichten belegen. Grundsätzlich können auf anderen Bussystemen 50 aber auch andere, also kleinere oder größere Bitlängen mit Nutzdaten Nd belegbar sein. Der Zähler $Z_1$ weist in diesem Ausführungsbeispiel des Verfahrens stets eine Bitlänge von 4 Bit auf.

Die mittlere in Figur 3 dargestellte Nachrichtenstruktur zeigt die Nachrichtenstruktur einer mit einem Zähler $Z_2$ ausgestatteten Zufallszahl CH, welche im Rahmen der Ausführung eines erfindungsgemäßen Verfahrens durchgeführten Challenge-Response Authentifizierung von der ersten Systemkomponente 1 an die zweite Systemkomponente 2 versandt wird. Auch diese Nachrichtenstruktur weist einen Zähler $Z_2$ auf, welcher in diesem Ausführungsbeispiel 4 Bit sowie 4 Null-Bits umfasst. Die Zufallszahl CH selbst kann in diesem Ausführungsbeispiel des Verfahrens rein beispielhaft 60 Bit umfassen. Sie wird für jedes zu übertragende Nutzdatenpaket N neu, zufällig generiert.

Die unterste in Figur 3 dargestellte Nachrichtenstruktur entspricht der Nachrichtenstruktur eines Schutzdatenpakets S, welches ebenfalls einen Zähler $Z_3$ aufweist. Der Zähler $Z_3$ des Schutzdatenpakets S weist eine Bitlänge auf, welche in diesem Ausführungsbeispiel rein beispielhaft dem Bytewert, also der Anzahl der belegbaren Bytes des dem Schutzdatenpaket S zuordenbaren Nutzdatenpakets N entspricht. Weist das dem Schutzdatenpaket S zuordenbare Nutzdatenpaket N beispielsweise eine Bitlänge von 64 Bit auf, so entsprechen diese 64 Bit genau 8 Byte, weshalb der Zähler $Z_3$ des Schutzdatenpakets S eine Bitlänge von 8 Bit aufweist, wobei in diesem Ausführungsbeispiel rein beispielhaft vier dieser Bit als Null-Bit ausgeführt sind und die vier verbleibenden Bit als der eigentliche Zähler genutzt werden. Mit anderen Worten ausgedrückt weist der Zähler $Z_3$ des Schutzdatenpakets S eine Bitlänge von X Bit auf, wobei X der Anzahl der Bytes des dem Schutzdatenpaket S zuordenbaren Nutzdatenpakets N entspricht, wobei auch der Zähler $Z_1$ des Nutzdatenpakets N berücksichtigt wird. Der wesentliche Gegenstand des Schutzdatenpakets S ist der für das zu schützende Nutzdatenpaket N berechnete Message Authentication Code MAC, welcher in diesem Ausführungsbeispiel rein beispielhaft 56 Bit umfasst und dessen Berechnungsgrundlage im Folgenden zu der Figur 4 beschrieben wird. Mit anderen Worten ausgedrückt weist der Zähler in diesem Ausführungsbeispiel rein beispielhaft ebenfalls eine Bitlänge von 4 Bit auf, dessen Wert für die Zähler von Nutzdatenpaket N und Schutzdatenpaket S übernommen wird.

In Figur 4 sind zwei verschiedene Berechnungsgrundlagen von Message Authentication Codes MAC für zwei verschiedene Ausführungsbeispiele erfindungsgemäßer Verfahren dargestellt. Mit anderen Worten ausgedrückt handelt es sich bei den in Figur 4 dargestellten Diagrammen um diejenigen Daten, welche im Rahmen verschiedener Ausführungsbeispiele des erfindungsgemäßen Verfahrens zur Bildung der Schutzdatenpakete S herangezogen werden. Dabei ist zwischen verschiedenen Möglichkeiten der Bildung eines Schutzdatenpakets S zu unterscheiden. Genauer beschrieben ergeben sich insbesondere, je nachdem, ob zu einem Replay-Schutz ein globaler Zeitstempel zur Anwendung kommt oder das Challenge-Response-Verfahren durchgeführt wird (siehe oben), zwei verschiedene Berechnungsgrundlagen.

In einigen Ausführungsvarianten erfindungsgemäßer Verfahren wird ein Schutzdatenpaket S über die Systemzeit T und über zumindest einen Teil der Nutzdaten Nd desjenigen zu übertragenden Nutzdatenpakets N gebildet, welchem das Schutzdatenpaket S zuordenbar ist. Dies ist der Fall, wenn ein globaler Zeitstempel für den Replay-Schutz zum Einsatz kommt. In anderen Ausführungsbeispielen erfindungsgemäßer Verfahren, bei welchen ein Schutz vor Replay-Angriffen durch die Ausführung einer Challenge-Response-Authentifizierung realisiert wird, wird ein Schutzdatenpaket S über die generierte Zufallszahl CH und über zumindest einen Teil der Nutzdaten Nd desjenigen zu übertragenden Nutzdatenpakets N gebildet, welchem das Schutzdatenpaket S zuordenbar ist. In den zuvor beschriebenen Ausführungsvarianten werden Schutzdatenpakete S allerdings ferner über weitere Datenpaketbestandteile gebildet. Das in Figur 4 obere Diagramm zeigt all diejenigen Datenpaketbestandteile, über welche das Schutzdatenpaket S in einer einen globalen Zeitstempel verwendenden Ausführungsvariante des erfindungsgemäßen Verfahrens gebildet wird. Hier wird der Message Authentication Code MAC rein beispielhaft über den Zeitstempel, also über die Systemzeit T, über die Bitlänge der Nutzdaten lNdl, über den dem Schutzdatenpaket S zugeordneten Message-Identifier IDS, über den Message-Identifier IDN des zu schützenden Nutzdatenpakets N sowie über mindestens einen Teil der Nutzdaten Nd des zu schützenden Nutzdatenpakets N selbst gebildet. Dabei nehmen die Systemzeit T eine Bitlänge von 7 Byte, die Bitlänge der Nutzdaten lNdl eine Bitlänge von 1 Byte, die beiden genannten Message Identifier IDS und IDN eine Bitlänge von jeweils 4 Byte und die berücksichtigten Nutzdaten Nd eine Bitlänge von maximal 32 Byte ein, sodass sich in diesem Ausführungsbeispiel des Verfahrens rein beispielhaft ein Message Authentication Code MAC aus einem Input von insgesamt 48 Byte ergibt. Der Output dieser Berechnung, welcher sodann als Schutzdatenpaket S verschickt wird, ist allerdings wesentlich kürzer. Beispielsweise kann der Output der MAC-Berechnung eine 128 Bit CMAC sein, welche auf eine Bitlänge von 56 Bit gekürzt wurde, damit sie zusammen mit dem Zähler Z in eine CAN-Nachricht, das Schutzdatenpaket S passt.

Es können allerdings auch erfindungsgemäße Verfahren ausgeführt werden, bei welchen das Schutzdatenpaket S über weniger Datenpaketbestandteile gebildet wird. Beispielsweise können erfindungsgemäße Verfahren ausgeführt werden, bei welchen das Schutzdatenpaket S rein beispielhaft ausschließlich über die Systemzeit T und über einen Teil der Nutzdaten Nd desjenigen zu übertragenden Nutzdatenpakets N gebildet wird, welchem das Schutzdatenpaket S zuordenbar ist. Es können allerdings auch ganz andere Schutzdatenpakete S als die zuvor beschriebenen generiert und versandt werden.

Die untere in Figur 4 dargestellte Berechnungsgrundlage für den Message Authentication Code MAC ist im Wesentlichen zu dem oben in Figur 4 dargestellten identisch. Sie kann im Unterschied zu der zuvor beschriebenen Ausführungsvariante bei Ausführungsformen erfindungsgemäßer Verfahren verwandt werden, bei welchen anstelle eines globalen Zeitstempels eine Challenge-Response Authentifizierung vorgenommen wird. Dem entsprechend besteht der einzige Unterschied der unten in Figur 4 dargestellten Berechnungsgrundlage zu der oberen in Figur 4 dargestellten Berechnungsgrundlage darin, dass anstelle des Zeitstempels beziehungsweise der Systemzeit T die im Rahmen der Challenge-Response Authentifizierung generierte Zufallszahl CH zur Berechnung des Message Authentication Codes MAC verwandt wird. Dabei umfasst auch die Zufallszahl CH in diesem Ausführungsbeispiel rein beispielhaft eine Bitlänge von 7 Byte. Die restliche Nachrichtenstruktur ist identisch zu der zuvor beschriebenen. Der Sicherheitslevel der verwendeten Schlüssel zur MAC-Berechnung ist 128 Bit. Ein Bruteforceangriff gegen den Schlüssel ist somit nicht möglich.

Ein Bruteforceangriff auf die 56 Bit MAC ist theoretisch möglich, jedoch in der Praxis nicht anwendbar. So würde das volle Ausschöpfen der möglichen MACs bei einem zugrundeliegenden CAN-FD-Bussystem beispielsweise bei 20.000 Versuchen/Sekunde und beispielsweise bei einer ~ 2MBit/s betragenden Vollauslastung des CAN-FD-Bussystems mehr als 100.000 Jahre dauern. Selbst eine 1%-ige Erfolgschance würde bereits mehr als 1.000 Jahre benötigen.

Das erfindungsgemäße Verfahren eignet sich insbesondere auch für eine über Ethernet erfolgenden Kommunikation zwischen Systemkomponenten. Ein Hackerangriff mit 100MBit/s würde hier mit einer 1%-igen Chance mehr als 20 Jahre für eine erfolgreiche Manipulation benötigen oder mehr als 2 Jahre mit einer 1%-igen Chance bei einer Übertragungsrate von 1 GBit/s. Des Weiteren ist das erfindungsgemäße Verfahren insbesondere kompatibel zu CAN-Bussystemen beziehungsweise zu CAN-FD-Bussystemen. Zusätzlich generierte Zufallszahlen CH und MAC-Nachrichten passen in normale CAN-Frames. MAC-Nachrichten können wie bereits oben ausgeführt lediglich optional sein, das heißt, die Signierung kann nach Bedarf erfolgen, um die Auslastung des Bussystems zu verringern. Ferner besteht eine hohe Rückkompatibilität zu bestehenden Nachrichten. Das erfindungsgemäße Verfahren kann für ASIL-Nachrichten ohne Anpassung der Nutznachrichten ausgeführt werden, da die zugehörigen Zähler Z bereits vorhanden sind (siehe oben). Andere, nicht ASIL-Nachrichten benötigen nur zusätzlich 4 Bit für den Zähler Z und es sind keine hochintrusiven Eingriffe in bestehende Nachrichten erforderlich. Ferner können die signierten Daten auch über eine zusätzliche Stromchiffre verschlüsselt werden. Als Initialisierungsvektor der Stromchiffre dient in diesem Ausführungsbeispiel rein beispielhaft zumindest ein Teil des N-Bit umfassenden Zeitstempels oder ein Teil der N-Bit umfassenden Zufallszahl/Challenge und zumindest ein Teil eines N-Bit umfassenden Message Authentication Code (MAC), wobei $N \in \mathbb{N}$ Konkret dienen in diesem Ausführungsbeispiel als Initialisierungsvektor der Stromchiffre der 56-Bit Zeitstempel und der 56-Bit MAC der Nachricht. Dabei müssen die Daten erst signiert und dann verschlüsselt werden.

Ferner können erfindungsgemäße Verfahren ausgeführt werden, bei welchen der globale Zeitstempel, also die Systemzeit T nicht mitübertragen wird, sondern lediglich implizit ist. In einer solchen Ausführung überträgt der Master des Bussystems 50 auf Anfrage mindestens einer Systemkomponente 1, 2 eine für dessen funktionale Gruppe authentifizierte Zeit. Die Systemkomponenten 1, 2 zählen diesen dann eigenständig hoch. Der Master des Bussystems 50 legt weiterhin einen nichtauthentifizierte Zeitstempel auf den CAN. Diese dient nur als Richtwert für die Systemkomponenten zur Erkennung von Jitter. Die initiale Zeit wird von dem Master des Bussystems bei KI.30 als Zufallszahl generiert. Als Frequenz für die Inkrementierung des Zeitstempel können beispielsweise 100ms verwandt beziehungsweise eingestellt werden.

**Bezugszeichenliste**

| | |
|---|---|
| 1 | erste Systemkomponente |
| 2 | zweite Systemkomponente |
| 4 | CAN-High-Leitung |
| 6 | CAN-Low-Leitung |
| 7 | Terminierungswiderstand |
| 8 | synchronisierte Zeiteinheit |
| 10 | Signierungs- und Signierungsprüfungseinheit |
| 50 | Bussystem |
| C H | Zufallszahl |
| N | Nutzdatenpaket |
| N d | Nutzdaten |
| I N d I | Länge der Nutzdaten |
| S | Schutzdatenpaket |
| T | Systemzeit |
| Z | Zähler |
| $Z_1$ | Zähler des Nutzdatenpakets |
| $Z_2$ | Zähler einer Zufallszahl |
| $Z_3$ | Zähler des Schutzdatenpakets |

**Patentansprüche**

1. Verfahren zu einem Manipulationsschutz von über ein Bussystem (50) zwischen mindestens zwei Systemkomponenten (1, 2) zu übertragenden Nutzdatenpaketen (N), wobei die Systemkomponenten (1, 2) jeweils eine Signierungs- und Signierungsprüfungseinheit (10) umfassen, mittels welcher Datenpakete erzeug- und prüfbar sind, **dadurch gekennzeichnet, dass**

   - von einer ersten der Systemkomponenten (1) ein eigenständiges Schutzdatenpaket (S) mit Schutzinformationen für ein über das Bussystem (50) zu übertragendes Nutzdatenpaket (N) generiert wird, welches von diesem Nutzdatenpaket (N) unabhängig, ihm jedoch gleichwohl eindeutig zuordenbar ist, wonach
   - das generierte Schutzdatenpaket (S) separat von dem zugehörigen Nutzdatenpaket (N) über das Bussystem (50) an die zweite der Systemkomponenten (2) versendet wird, und
   - eine Verifikation der Authentizität des übertragenden Nutzdatenpakets (N) anhand des gesendeten Schutzdatenpakets (S) durch die zweite der Systemkomponenten (2) erfolgt.

2. Verfahren nach Anspruch 1, **dadurch gekennzeichnet, dass** in den Signierungs- und Signierungsprüfungseinheiten (10) der mindestens zwei Systemkomponenten (1, 2) jeweils mindestens ein identischer kryptografischer Schlüssel hinterlegt ist, mittels welchem versandte Schutzdatenpakete (S) ver- und entschlüsselt werden.

3.  Verfahren nach einem der vorhergehenden Ansprüche, **dadurch gekennzeichnet, dass** jedes Nutzdatenpaket (N), für welches ein Schutzdatenpaket (S) generiert wird, einen Zähler (Z) mit einer Bitlänge von N Bit umfasst, welcher bei jeder Übermittlung des jeweiligen Nutzdatenpakets (N) inkrementiert wird.

4.  Verfahren nach Anspruch 3, **dadurch gekennzeichnet, dass** der Zähler (Z) eine Bitlänge von 4-Bit aufweist.

5.  Verfahren nach einem der vorhergehenden Ansprüche, **dadurch gekennzeichnet, dass** jedes Schutzdatenpaket (S) sowie jedes Nutzdatenpaket (N) jeweils einen, über die Zuordnung des jeweiligen Datenpaketes (S, N) zu einer Prioritätsstufe entscheidenden Message-Identifier (IDS, IDN) aufweist, wobei der Wert des Message-Identifiers (IDS) eines Schutzdatenpakets (S) derart naheliegend zu dem Wert des Message-Identifiers (IDN) des diesem zuordenbaren Nutzdatenpakets (N) gewählt ist, dass das Nutzdatenpaket (N) und das zuordenbare Schutzdatenpaket (S) derselben oder unmittelbar zueinander benachbarten Prioritätsstufen zugeordnet werden.

6.  Verfahren nach einem der vorhergehenden Ansprüche, **dadurch gekennzeichnet, dass** über dasselbe Bussystem (50) auch nicht durch Schutzdatenpakete (S) zu verifizierende Nutzdatenpakete (N) zwischen den mindestens zwei Systemkomponenten (1, 2) übermittelt werden, für welche keine Schutzdatenpakete (S) generiert und versendet werden.

7.  Verfahren nach einem der vorhergehenden Ansprüche, **dadurch gekennzeichnet, dass** die mindestens zwei Systemkomponenten (1, 2) eine auf eine gemeinsame Systemzeit (T) synchronisierte Zeiteinheit (8) aufweisen.

8.  Verfahren nach Anspruch 7, **dadurch gekennzeichnet, dass** das Schutzdatenpaket (S) über die Systemzeit (T) und über zumindest einen Teil der Nutzdaten (Nd) desjenigen zu übertragenden Nutzdatenpakets (N) gebildet wird, welchem das Schutzdatenpaket (S) zuordenbar ist.

9.  Verfahren nach einem der Ansprüche 1 bis 7, **dadurch gekennzeichnet, dass** das Verfahren ferner den Schritt der Ausführung einer Challenge-Response Authentifizierung zwischen den mindestens zwei Systemkomponenten (1, 2) umfasst, wobei eine generierte Zufallszahl (CH) von einer der mindestens zwei Systemkomponenten (1, 2) an die andere der mindestens zwei Systemkomponenten (1, 2) übermittelt und die Antwort auf selbige zur Authentifizierung verwandt wird.

10. Verfahren nach Anspruch 9, **dadurch gekennzeichnet, dass** das Schutzdatenpaket (S) über die generierte Zufallszahl (CH) und über zumindest einen Teil der Nutzdaten (Nd) desjenigen zu übertragenden Nutzdatenpakets (N) gebildet wird, welchem das Schutzdatenpaket (S) zuordenbar ist.

11. Verfahren nach Anspruch 3, 5 und einem der Ansprüche 8 oder 10, **dadurch gekennzeichnet, dass** das Schutzdatenpaket (S) ferner über den Zähler (Z) sowie über den Message-Identifier (IDN) desjenigen Nutzdatenpakets (N) gebildet wird, welchem das Schutzdatenpaket (S) zuordenbar ist.

12. Verfahren nach Anspruch 3, 5 und einem der Ansprüche 8, 10 oder 11, **dadurch gekennzeichnet, dass** das Schutzdatenpaket (S) ferner über den Zähler (Z) sowie über den Message-Identifier (IDS) des Schutzdatenpakets (S) gebildet wird.

13. Verfahren nach einem der vorhergehenden Ansprüche, **dadurch gekennzeichnet, dass** für ein zu schützendes Nutzdatenpaket (N) ein Message Authentication Code (MAC) berechnet und in dem dem Nutzdatenpaket (N) zuordenbaren Schutzdatenpaket (S) übertragen wird.

14. Verfahren nach einem der vorhergehenden Ansprüche, **dadurch gekennzeichnet, dass** Nutzdatenpakete (N), deren Authentizität anhand des diesen jeweils zuordenbaren Schutzdatenpakets (S) nicht verifizierbar ist, verworfen werden.

15. Verfahren nach einem der vorhergehenden Ansprüche, **dadurch gekennzeichnet, dass** das Bussystem (50) ein CAN-Bussystem ist.

FIG. 1

FIG. 2

| $Z_1$ | Nd |
|---|---|

| $Z_2$ | CH |
|---|---|

| $Z_3$ | MAC |
|---|---|

FIG. 3

| T | IN$_1$ | IDS | IDN | N |
|---|---|---|---|---|

$\underbrace{\qquad\qquad\qquad\qquad\qquad\qquad\qquad\qquad}_{\text{MAC}}$

MAC

| CH | IN$_2$ | IDS | IDN | N |
|---|---|---|---|---|

$\underbrace{\qquad\qquad\qquad\qquad\qquad\qquad\qquad\qquad}_{\text{MAC}}$

MAC

FIG. 4

**Europäisches Patentamt**
**European Patent Office**
**Office européen des brevets**

## EUROPÄISCHER RECHERCHENBERICHT

Nummer der Anmeldung

EP 16 17 2350

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 033229 A1 (SIEMENS AG [DE]) 9. Februar 2012 (2012-02-09) * Zusammenfassung * * Absatz [0005] - Absatz [0027] * * Absatz [0034] - Absatz [0054] * * Abbildungen 1-4 * ----- | 1-15 | INV. H04L29/06 H04L9/32 |
| X | DE 10 2012 210327 A1 (BAYERISCHE MOTOREN WERKE AG [DE]) 19. Dezember 2013 (2013-12-19) * Zusammenfassung * * Absatz [0005] - Absatz [0027] * * Absatz [0049] * ----- | 1-15 | |
| A,D | DE 10 2009 045133 A1 (BOSCH GMBH ROBERT [DE]) 31. März 2011 (2011-03-31) * Zusammenfassung * * Absatz [0008] * * Absatz [0019] - Absatz [0032] * ----- | 1-15 | |
| A | US 2015/074404 A1 (KASPER BJOERN [DE] ET AL) 12. März 2015 (2015-03-12) * Zusammenfassung * * Absatz [0030] - Absatz [0037] * ----- | 4 | RECHERCHIERTE SACHGEBIETE (IPC) H04L |

Der vorliegende Recherchenbericht wurde für alle Patentansprüche erstellt

| Recherchenort | Abschlußdatum der Recherche | Prüfer |
|---|---|---|
| München | 4. November 2016 | Kopp, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 2350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2016

| Im Recherchenbericht angeführtes Patentdokument | Datum der Veröffentlichung | Mitglied(er) der Patentfamilie | Datum der Veröffentlichung |
|---|---|---|---|
| DE 102010033229 A1 | 09-02-2012 | CN 103053131 A<br>DE 102010033229 A1<br>EP 2577903 A1<br>US 2013132730 A1<br>WO 2012016857 A1 | 17-04-2013<br>09-02-2012<br>10-04-2013<br>23-05-2013<br>09-02-2012 |
| DE 102012210327 A1 | 19-12-2013 | KEINE | |
| DE 102009045133 A1 | 31-03-2011 | CN 102577228 A<br>DE 102009045133 A1<br>EP 2484047 A1<br>JP 5584767 B2<br>JP 2013506369 A<br>US 2012303973 A1<br>WO 2011039037 A1 | 11-07-2012<br>31-03-2011<br>08-08-2012<br>03-09-2014<br>21-02-2013<br>29-11-2012<br>07-04-2011 |
| US 2015074404 A1 | 12-03-2015 | CN 104426669 A<br>DE 102013218212 A1<br>US 2015074404 A1 | 18-03-2015<br>12-03-2015<br>12-03-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009002396 A1
- DE 102009045133 A1
- DE 102004036810 A1